# EUROPÄISCHE PATENTANMELDUNG

(11) **EP 1 332 793 A1**
(43) Veröffentlichungstag der Anmeldung: **06.08.2003**
(21) Anmeldenummer: 02002525.0
(22) Anmeldetag: 04.02.2002
(51) Int. Cl.: B01F 15/04, B29B 7/60

(54) **Verfahren und Vorrichtung zur Dosierung von Partikeln**

(71) Anmelder: PET INTERNATIONAL TRADING GMBH, 6210 SURSEE (CH)
(72) Erfinder: Ottiger, Urs, 6214 Schenkon (CH); Steimle, Markus, 4852 Rothrist (CH)
(74) Vertreter: Troesch Scheidegger Werner AG

(57) **Zusammenfassung**

Beim erfindungsgemässen Dosier- und Mischverfahren werden einem Hauptpartikelstrom Nebenpartikel (5) zugeführt, deren Anzahl währen der Zuführung mittels eines optischen Sensors (9) gemessen und einer Steuerung (10) übermittelt werden. Die Steuerung (10) steuert dann aufgrund des vorgegebenen Mischungsverhältnisse zwischen Haupt- und Nebenpartikeln die Zufuhrgeschwindigkeit der Nebenpartikel (5). Vorteilhaft erfolgt der Transport der Nebenpartikel (5) mittels einer Vibrationsrinne (8), welche die stufenlose Einstellung der Transportgeschwindigkeit erlaubt.

## Beschreibung

Die vorliegende Anmeldung betrifft ein Verfahren nach dem Oberbegriff von Anspruch 1 sowie ein Vorrichtung nach dem Oberbegriff von Anspruch 5.

Häufig besteht in der industrialisierten Bearbeitung das Problem, dass Rohstoffe in bestimmten Zusammensetzungen und Mengen gemischt werden müssen, bevor sie einer Bearbeitungsmaschine zugeführt werden.

Insbesondere in der Kunststoffindustrie wird für die Beschickung von Maschinen, wie beispielsweise Spritzmaschinen, Kunststoff-Granulat eingesetzt, das von den Herstellern in bestimmten Qualitäten und Farben hergestellt und geliefert wird.

Soll nun ein bestimmtes Material eingesetzt werden, wie beispielsweise ein Polyamid-Granulat, so wird davon ein in grossen Mengen hergestelltes helles Granulat als Basismaterial verwendet, welches sich für die Beimischung von Farbstoffen, beispielsweise in Form von speziell eingefärbtem Polyamid-Granulat als Masterbatch eignet. Gerade bei der Herstellung von Massenprodukten ist es nun wichtig, entsprechend dem Design und Modetrends das Endprodukt mit bestimmten Farben zu versehen, wobei mit möglichst wenigen Grundmaterialien gearbeitet werden soll. Die gewünschten Farben können dann durch Zumischung von eingefärbtem Zusatzmaterial, häufig eingefärbtes Granulat mit sehr starker Farbkonzentration, erzielt werden, wobei der Anteil dieser Zusatzmaterialien sehr gering ist, typischerweise im Bereich von ca. 0.5 - 3.5% Anteil am Endprodukt.

Das Problem besteht nun in der zuverlässigen und korrekten Dosierung und Beimischung dieser Zusatzmaterialien, da bereits sehr kleine Abweichungen zu optisch erkennbaren Unterschieden am Endprodukt führen.

Derartige Dosierungen werden herkömmlich beispielsweise mittels volumetrisch arbeitenden Vorrichtungen vorgenommen, wie beispielsweise Dosierschnecken, Scheibendosierungsvorrichtungen oder Schleusen. Solche Vorrichtungen sind einfach im Aufbau und bieten ab einer Durchsatzrate von ca. 1.5 kg / Stunde eine Genauigkeit von ca. 1 - 1.5%. Bei Unterschreitung dieser Durchsatzrate nimmt die Genauigkeit rapide ab, was schliesslich zu sehr starken Produkteunterschieden durch stark schwankende Mischungen der Granulate führt. Für die Beimischung von sehr kleinen Zusatzmaterialien oder für die Produktion mit kleinen Durchsatzraten eignen sich deshalb diese Verfahren nicht.

Weiter sind gravimetrische Dosiereinrichtungen bekannt, welche gegenüber der gerade beschriebenen volumetrischen Dosierung eine stark verbesserte Genauigkeit aufweist. Allerdings weisen auch diese Vorrichtungen im Klein- resp. Kleinstmengenbereich Probleme mit der exakten Dosierung auf, wobei auch die Einrichtung, nämlich entsprechende Präzisionswaagen, sehr teuer sind und daher für einen rationellen Einsatz kaum in Frage kommen, insbesondere bei kleinen Mengen und nur wenig zu mischenden Komponenten.

Die Aufgabe der vorliegenden Erfindung bestand nun darin, eine Dosier- und Mischvorrichtung zu finden, welche für eine exakte und zuverlässige Dosierung und Mischung auch bei kleinsten Anteile von diskreten Partikeln eingesetzt werden kann.

Diese Aufgabe wird erfindungsgemäss durch ein Verfahren nach den Merkmalen von Anspruch 1 gelöst.

Weitere, bevorzugte Ausführungsformen des Verfahrens ergeben sich aus den Merkmalen der Ansprüche 2 bis 3.

Der dem Hauptpartikelstrom zuzuführende Nebenstrom wird über ein Transportmittel dem Hauptstrom zugeführt, wobei die Transportgeschwindigkeit über die elektro-optische Erfassung der Partikelanzahl des Nebenstroms derart geregelt oder gesteuert wird, dass exakt das gewünschte Mischverhältnis zwischen Hauptpartikeln und Nebenpartikeln eingestellt wird. Vorteilhaft kann dies bis zu kleinsten Beifügemengen an Nebenpartikeln erfolgen, da durch die optische Erfassung selbst einzelne Partikel erfasst und entsprechend die Beimischung gesteuert werden kann.

Durch die bevorzugte Verwendung eines vibrierenden Transportmittels, vorzugsweise eines Vibrationskanals, kann die Zuführmenge stufenlos geregelt werden. Zudem bestehet damit der Vorteil, dass die Partikel auf dem Vibrationskanal vereinzelt werden und damit einerseits ein zuverlässige Messung und andererseits eine exakte Dosierung stattfinden kann.

Vorteilhaft erfolgt die Messung der Partikel noch auf dem Transportmittel selbst, alternativ kann sie aber auch erst nach dem Verlassen der Transportmittel erfolgen.

Vorteilhaft kann die erzeugte Partikelmischung direkt einer Verarbeitungsmaschine zugeführt werden, oder aber als fertige Mischung in einen Speicher zur späteren Verwendung abgefüllt werden. Insbesondere eignet sich das erfindungsgemässe Verfahren für die Dosierung und Mischung von Kunststoffgranulat, wie beispielsweise Polyamid-Granulat, welches gerade in der Spritzgusstechnik weit verbreiten eingesetzt wird.

Durch den Einsatz des erfindungsgemässen Verfahrens lassen sich so direkt Kunststoff-Verarbeitungsmaschinen mit Granulatmischungen beschicken, welche ein konstantes Mischverhältnis aufweisen und damit ein konstantes Ergebnis beim fertigen Erzeugnis garantieren. Durch die Möglichkeit, auch nur kleinste Mengen an Nebengranulaten einem Hauptgranulat zuzusetzen, beispielsweise eingefärbtes Polyamid-Granulat einem farblosen Polyamid-Granulat mit einem Anteil von unter 2% beizumischen, eignet sich das erfindungsgemässe Verfahren insbesondere für eine wirtschaftliche Herstellung von Massenkunststoffprodukten, und dabei insbesondere für Produkte mit kleinen Abmessungen. Durch die Möglichkeit, mehrere solcher Dosiereinrichtungen parallel zu betreiben, können vorteilhaft auch Spritzvorrichtungen mit eine Vielzahl von Aggregaten beschickt werden, welche in einem oder mehreren Arbeitsgängen Produkte mit unterschiedlicher Materialund/oder Farbzusammenstellung erzeugen.

Weiter wird die Aufgabe erfindungsgemäss durch eine Vorrichtung mit den Merkmalen nach Anspruch 5 gelöst.

Weitere, bevorzugte Ausführungsformen ergeben sich aus den Merkmalen der Ansprüche 6 bis 11.

Der erfindungsgemässe Aufbau einer solchen Dosier- und Messvorrichtung ist im Vergleich zu einer Einrichtung mit gravimetrischen Messelementen wesentlich einfacher und insbesondere preisgünstiger, insbesondere bei der Anordnung von mehreren parallelen Transporteinrichtungen für mehrere Nebenpartikelströme.

Die bevorzugte Verwendung einer Vibrationsrinne erlaubt einen optimalen Transport gerade von kleinen Mengen von Partikeln und bewirkt zudem noch eine Vereinzelung der Partikel, welche die Zuverlässigkeit und Genauigkeit der nachfolgenden Mengenmessung durch die optische Erfassungseinheit verbessern. Zudem weist eine solche Vibrationsrinne einen einfachen und robusten Aufbau auf und lässt sich vorteilhaft praktisch stufenlos in Bezug auf die Transportgeschwindigkeit regulieren.

Ein grosser Vorteil liegt weiter im bevorzugten Einsatz einer elektronischen Steuerung, welche neben der Erfassung der Anzahl der Nebenpartikel und entsprechenden Steuerung der Transporteinrichtung auch mit den damit verbundenen Maschinen kommunizieren und damit regelnd oder steuernd auf den gesamten Herstellungsprozess Einfluss nehmen kann.

Ausführungsbeispiel der vorliegenden Erfindung werden nachstehend anhand der Figuren noch näher erläutert. Es zeigen
Fig. 1 schematisch den Prozessaufbau einer erfindungsgemässen Vorrichtung;
Fig. 2 schematisch den Längsschnitt durch den Eingangsbereich einer Transporteinrichtung einer erfindungsgemässen Vorrichtung;
Fig. 3 schematisch den Längsschnitt durch den Ausgangsbereich einer Transporteinrichtung in Form einer Vibrationsrinne mit elektro-optischem Sensor;
Fig. 4 schematisch den Längsschnitt durch eine alternative Ausführungsform des Ausgangsbereiches einer erfindungsgemässen Vibrationsrinne; und
Fig. 5 die Seitenansicht einer erfindungsgemässen Vorrichtung für die Zuführung von Kunststoffgranulat zu einer Kunststoffspritzmaschine.

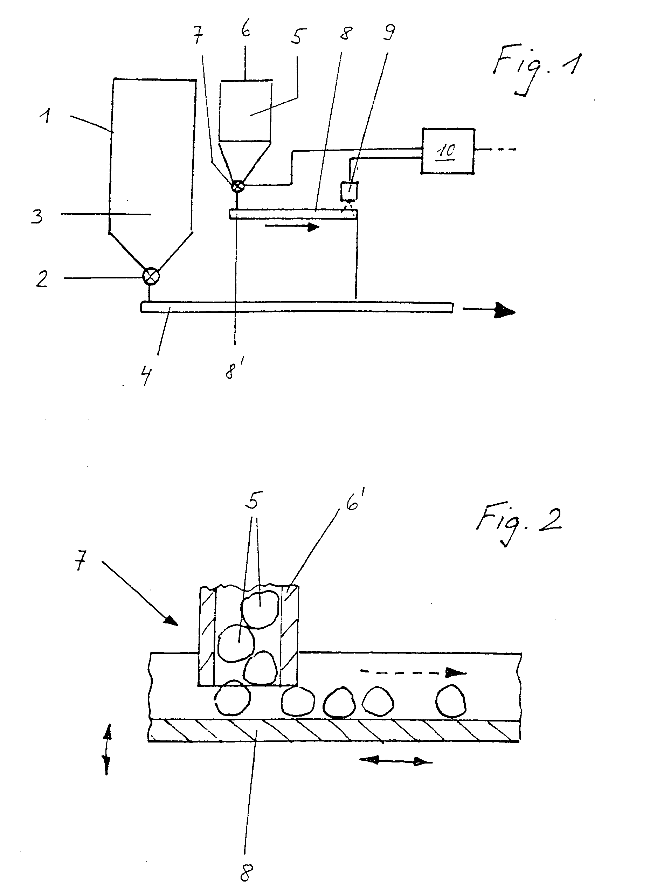

In Figur 1 ist schematisch der erfindungsgemässe Dosierund Mischprozess dargestellt, als Beispiel ein Mischprozess von Kunststoff-Granulat. Aus einem Vorratsbehälter 1 werden über eine Dosiervorrichtung 2 die Hauptpartikel 3, beispielsweise farbloses Kunststoff-Granulat, auf einen Förderkanal 4 aufgebracht und schliesslich zu einer Maschine oder einem weiteren Vorratsbehälter (nicht dargestellt) in Pfeilrichtung transportiert. Die Bemessung der entsprechenden Menge an Hauptpartikeln 3 erfolgt auf bekannte Weise, beispielsweise mittels volumetrischen Einrichtungen wie Dosierschnecke, Scheibendosierung oder durch den Einsatz von Schleusen. Die Hauptpartikel werden typischerweise in derart grossen Mengen gebraucht, dass diese Dosiervorrichtungen eine ausreichend grosse Genauigkeit aufweisen.

Zusätzlich werden nun beispielsweise Nebenpartikel 5, beispielsweise eingefärbtes Kunststoff-Granulat, in einem weiteren Vorratsbehälter 6 aufbewahrt und über eine Dosiereinrichtung 7 auf den Eingangsbereich 8' eines weiteren Transportbandes 8 aufgebracht. Am Ausgangsbereich des Transportbandes 8 ist nun eine elektro-optische Erfassungseinrichtung 9, beispielsweise ein Fotosensor, angeordnet, welcher die einzelnen Nebenpartikel 5 ab dem Transportband 8 erfasst und diese Information als elektronisches Signal einer Steuerung 10 weiterleitet. Diese Steuerung 10 wertet diese Signale aus und steuert entsprechend den erforderlichen Vorgabewerten, beispielsweise das Mischverhältnis zwischen Hauptpartikel und Nebenpartikeln, zumindest die Transportgeschwindigkeit des Transportbandes 8. Die Steuerung 10 ist vorteilhaft mit weiteren Komponenten der Vorrichtung verbunden, wie beispielsweise der Dosiervorrichtung 2 oder der nachfolgenden Maschine (nicht dargestellt), womit der ganze Mischprozess vollautomatisiert betrieben werden kann.

Vorteilhaft ist das Transportband 8 als Vibrationskanal ausgebildet, womit ein stufenlose Einstellung der Transportgeschwindigkeit und ggf. sogar der Transportrichtung erreicht werden kann. Dabei wird der Vibrationskanal durch einen elektrisch betriebenen Antrieb horizontal und/oder vertikal in Schwingungen versetzt, was zu einer Bewegung der im Vibrationskanal befindlichen Partikel führt. Durch Änderung der Art und Intensität dieser Schwingungen kann die Richtung und Geschwindigkeit der Bewegung der Partikel gezielt beeinflusst werden, beispielsweise durch die Steuerung 10.

In Figur 2 ist der schematisch Längsschnitt durch den Eingangsbereich 8' des Transportbandes 8 in Form eines Vibrationskanals dargestellt. Die Doppelpfeile geben die möglichen Vibrationsrichtungen des Vibrationskanals an. Die Dosiereinrichtung 7 nun einfach durch einen Austrittstutzen 6' des Vorratsbehälters 6 gebildet, welcher gegenüber dem Boden des Vibrationskanals 8 einen leicht grösseren Abstand als der grösste Durchmesser der Partikel 5 aufweist. Durch Einstellung dieses Abstandes kann nun das Ausfliessverhalten der Partikel 5 eingestellt werden, resp. die Fliessbetthöhe der Partikel 5 auf dem Vibrationskanal 8 eingestellt werden. Vorteilhaft erfolgt diese Einstellung derart, dass die Partikel 5 einlagig auf dem Vibrationskanal 8 zu liegen kommen. Durch den Transport in gestrichelter Pfeilrichtung werden nun die Partikel 5 zum Ausgangsbereich des Vibrationskanals 8 transportiert und dabei durch die Vibrationen ggf. vorteilhaft vereinzelt.

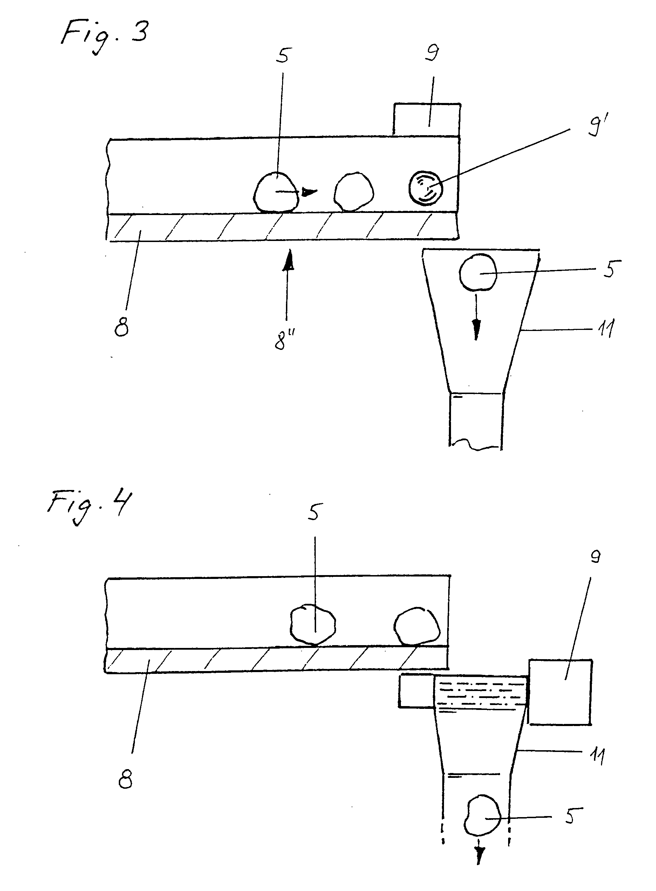

In Figur 3 ist nun der Ausgangsbereich 8'' des Vibrationskanals 8 dargestellt, an welchem noch am Kanal selbst der optische Sensor 9' der Erfassungseinrichtung 9 angebracht ist. Dieser Sensor 9' erfasst nun jeweils das Passieren eines Partikels 5 und erzeugt dabei ein elektrisches Signal, welches in der Steuerung 10 ausgewertet wird. Nach dem Passieren des Sensors 9' fallen die Partikel 5 in einen Trichter 11 und werden auf das Transportband 4 geleitet, wo sie mit den Hauptpartikeln 3 zusammengeführt werden.

Der Sensor 9' kann als einfacher Lichtsensor aufgebaut sein, oder alternativ ein flächiges Erfassungs- und Erkennungsfeld besitzen und damit die Struktur der Partikel 5 detaillierter erkennen. Damit ist es ggf. auch möglich, dass Passieren von zwei aneinanderhängenden Partikeln 5 zu erkennen und in der Steuerung 10 entsprechend auszuwerten.

Durch eine solche Anordnung ist es demnach möglich, einzelne Nebenpartikel 5 zu erfassen und in der gewünschten Anzahl oder Zeitbereich den Hauptpartikeln zuzuführen resp. beizumischen. Damit wird eine hohe Genauigkeit selbst bei kleinsten Mengen erzielt, was letztlich zu einer exakten Mischung auch über längere Zeiträume oder mit Unterbrüchen führt.

Es ist auch denkbar, das Verfahren resp. die Einrichtung bei bedarf ohne optische Erfassung zu betreiben, sobald der Anteil an Nebenpartikeln derart gross wird, dass eine genügende Genauigkeit durch die Dosiereinrichtung 7 erzielt werden kann.

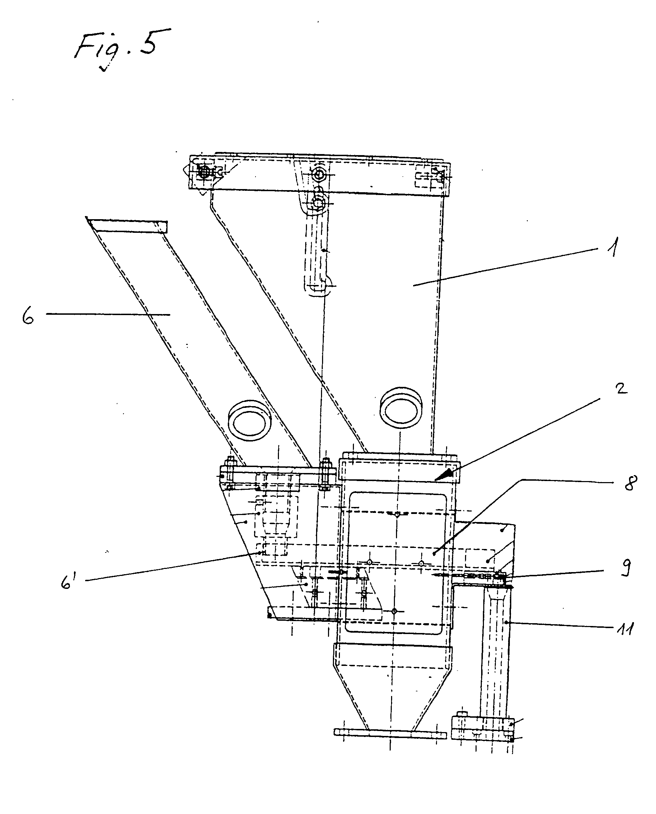

In Figur 4 ist weiter eine alternative Ausbildung des Ausgangsbereiches 8'' des Vibrationskanals 8 dargestellt. Hier ist nun der optische Sensor 9' nicht am Vibrationskanal 8 selbst angeordnet, sonder erst nach dem Ende des Vibrationskanals 8 im Fallbereich der Nebenpartikel 5 angeordnet, beispielsweise am Trichter 11. Damit werden die Nebenpartikel 5 erst nach dem Verlassen des Vibrationskanals 8 erfasst.

Figur 5 zeigt schliesslich noch die Seitenansicht einer erfindungsgemässen Vorrichtung für den Einsatz als Dosierund Mischvorrichtung für die direkte Speisung einer Kunststoff-Spritzmaaschine.

Der Vorratsbehälter 1 dient der Aufnahme beispielsweise von farblosem Kunststoff-Granulat, welches über den Ausgang 2 frei fliessend nach unten geführt wird. Daneben dient der Vorratsbehälter 6 der Aufnahme eine Nebengranulats, beispielsweise eines eingefärbten Kunststoff-Granulats, welches dem Haupt-Granulat in einem kleinen Mischverhältnis beigemischt werden soll. Hierfür fliesst das Nebengranulat über den Stutzen 6' auf die Vibrationsrinne 8, auf welcher dieses nach rechts zum Trichter 11 transportier wird. Gerade oberhalb des Trichters 11 ist hier nun der optische Sensor 9 angeordnet, welcher das Passieren der einzelnen Körner des Neben-Granulats erfasst und das erzeugte elektrische Signal einer Steuerung weitergibt.

Die unteren Teile der Vorrichtung können nun beispielsweise direkt mit dem Eingangsbereich einer Kunststoff-Spritzmaschine verbunden werden und diese damit direkt beliefert werden.

So können mit einer solchen Vorrichtung beispielsweise Mischungen mit einem Mischanteil von ca. 1% des Nebengranulats erzeugt werden, bei welchem eine Gesamtförderleistung von unter 3 kg / Stunden, beispielsweise bis zu 500 gr / Stunde mit konstantem Mischverhältnis erreicht werden kann.

Es ist klar, dass nicht nur ein Nebengranulat beigemischt werden kann, sondern dass parallel mehrere solcher Vibrationsrinnen 8 in der Vorrichtung angeordnet werden können, um in unterschiedlichem Verhältnis dem Hauptstrom beigemischt zu werden.

## Patentansprüche

1. Verfahren zur Dosierung und Mischung von Partikeln, wie Körner oder Granulat, wobei einem Hauptpartikelstrom mit Hauptpartikeln (3) mindestens ein Nebenpartikelstrom mit Nebenpartikel (5) in einem bestimmten, einstellbaren Verhältnis zugeführt wird, **dadurch gekennzeichnet, dass** die Nebenpartikel (5) über eine einstellbare Zuführeinheit (7) einem Transportmittel (8) zugeführt werden, welche die Nebenpartikel (5) zu einer optischen Erfassungseinheit (9) transportieren, und danach in den Hauptpartikelstrom überführen, wobei aufgrund der Messung der Anzahl der Nebenpartikel (5) durch die optische Erfassungseinheit (9) die Transportgeschwindigkeit des Transportmittels (9) und/oder Einstellung der Zuführeinheit (7) derart beeinflusst werden, dass immer die gleiche, einstellbare Menge an Nebenpartikeln (5) dem Hauptpartikelstrom zugeführt wird.

2. Verfahren nach Anspruch 1, **dadurch gekennzeichnet, dass** als Transportmittel ein Vibrationskanal (8) eingesetzt wird, dessen Vibrationsgeschwindigkeit und/oder Vibrationsamplitude einstellbar sind, wobei vorzugsweise diese beiden Parameter aufgrund der Messung der optischen Erfassungseinheit (9) geregelt eingestellt werden.

3. Verfahren nach Anspruch 1 oder 2, **dadurch gekennzeichnet, dass** die optische Erfassungseinheit (9) am Ende (8'') des Transportmittels (8) angeordnet ist und die Messung der Nebenpartikel (5) noch auf dem Transportmittel (8) selbst erfolgt.

4. Verfahren nach einem der Ansprüche 1 bis 3, **dadurch gekennzeichnet, dass** die zusammengeführten Haupt- (3) und Nebenpartikel (5) direkt einer Verarbeitungsmaschine zugeführt werden, vorzugsweise einer Kunststoff-Spritzmaschine.

5. Anwendung des Verfahrens nach einem der Ansprüche 1 bis 4 zur Erzeugung einer Mischung von Kunststoffgranulat in einem vorbestimmten Mischungsverhältnis, bestehend aus mindestens einem Hauptgranulat (3) und mindestens einem Nebengranulat (5).

6. Vorrichtung zur Dosierung und Mischung von Partikeln, wie Körner oder Granulat, wobei einem Hauptpartikelstrom mit Hauptpartikeln (3) mindestens ein Nebenpartikelstrom mit Nebenpartikel (5) in einem bestimmten, einstellbaren Verhältnis zugeführt wird, **dadurch gekennzeichnet, dass** sie für jeden Nebenpartikelstrom eine mindestens in Bezug auf die Transportgeschwindigkeit einstellbare Transporteinrichtung (8) aufweist, welche an ihrem Eingangsbereich (8') mit einer einstellbaren Zuführeinrichtung (7) für die Nebenpartikel (5) verbunden ist, und welche an ihrem Ausgangsbereich (8'') eine optische Messeinrichtung (9) aufweist, welche die transportierten Nebenpartikel (5) optisch erfasst und entsprechende elektrische Signale erzeugt, und welche mit einer elektronischen Auswertungseinheit (10) verbunden ist.

7. Vorrichtung nach Anspruch 6, **dadurch gekennzeichnet, dass** die Transporteinrichtung (8) als Vibrationsrinne, Transportband oder Transportschnecke ausgebildet ist.

8. Vorrichtung nach Anspruch 7, **dadurch gekennzeichnet, dass** die Vibrationsrinne (8) als stufenlos steuer- resp. regelbarer Längsvibrator ausgebildet ist, wobei die Abmessung der Rinne, insbesondere die Breite, den Abmessungen der Nebenpartikel (5) angepasst ist, vorzugsweise mindestens im Ausgangsbereich (8'') maximal die doppelte Breite des durchschnittlichen Durchmessers der Nebenpartikel (5) aufweist.

9. Vorrichtung nach einem der Ansprüche 6 bis 8, **dadurch gekennzeichnet, dass** die optische Messeinrichtung (9) im Endbereich (8'') der Transporteinrichtung (8) angeordnet ist, vorzugsweise den optischen Erfassungsbereich auf den Transportbereich gerichtet.

10. Vorrichtung nach einem der Ansprüche 6 bis 8, **dadurch gekennzeichnet, dass** die optische Messeinrichtung (9) unmittelbar am oder nach dem Ende der Transporteinrichtung (8) angeordnet ist, vorzugsweise den optischen Erfassungsbereich hinter das Ende der Transporteinrichtung (8) gerichtet, in den Austrittsbereich der Nebenpartikel (5).

11. Vorrichtung nach einem der Ansprüche 6 bis 10, **dadurch gekennzeichnet, dass** die elektronische Auswertungseinheit (10) eine SPS-Steuerung umfasst, welche vorzugsweise zusätzlich mit den weiteren, mit der Vorrichtung verbundenen Maschinen kommuniziert.
